# EUROPEAN PATENT APPLICATION

(11) **EP 4 258 114 A1**
(43) Date of publication of application: **11.10.2023**
(21) Application number: 22736947.7
(22) Date of filing: 03.01.2022
(51) Int. Cl.: G06F 9/48, G06F 9/448, G06F 9/50, G06F 9/4401, G06N 20/00

(54) **SERVICE OPERATION METHOD AND ELECTRONIC DEVICE SUPPORTING SAME**

(30) Priority: 11.01.2021 KR 20210003454
(71) Applicant: Samsung Electronics Co., Ltd., Suwon-si, Gyeonggi-do 16677 (KR)
(72) Inventor: LEE, Kyungseok, Suwon-si Gyeonggi-do 16677 (KR); YUN, Jihan, Suwon-si Gyeonggi-do 16677 (KR); KIM, Hyunjoon, Suwon-si Gyeonggi-do 16677 (KR); KIM, Hyojong, Suwon-si Gyeonggi-do 16677 (KR)
(74) Representative: HGF
(86) International application number: PCT/KR2022/095002
(87) International publication number: WO 2022/149970

(57) **Abstract**

One embodiment of the present invention discloses an electronic device comprising: memory including at least one application and a plurality of services; and a processor. The processor is configured to: in response to booting the electronic device, register, in a first service among the plurality of services, at least one service other than the first service among the plurality of services, the at least one service being registered in an inactive state preparing for execution by the at least one application, wherein the first service includes a list in which the at least one service in the inactive state is registered; execute a first application using a second service among the plurality of services; confirm whether the second service is registered in the list in response to a request for the second service of the first application; and switch the second service from the inactive state to an active state, in which the second service can be executed by the at least one application, when it is confirmed that the second service is registered in the list.

## Description

### [Technical Field]

Various embodiments disclosed in this document relate to a service operation method and an electronic device supporting the same.

### [Background Art]

As the distribution of electronic devices equipped with an independent operating system becomes more widespread, the electronic devices can support various services grafted onto their core functions. For example, electronic devices may include system services provided by the manufacturer of the operating system or a business operator of an original equipment manufacturer (OEM) in memory, and may execute these system services based on applications.

### [Disclosure of Invention]

### [Technical Problem]

In the boot-up process of the electronic device, the system services included in the memory may be controlled to have an active state that is available to an application (or executable by an application) according to routines defined in the framework. Therefore, the system services that are collectively activated according to formal routines may reside in the memory in an active state regardless of whether the corresponding system service is executed, and can meaninglessly occupy available space in the memory. In addition, the system services that are collectively activated may operate in the background on the electronic device regardless of whether the system service is executed, thereby affecting battery power consumption or processor response speed deterioration.

Various embodiments disclosed herein may provide a service operation method and an electronic device that supports the method, which may dynamically control the active or inactive state of a system service based on whether there is a request (or call) of an application for the system service.

### [Solution to Problem]

An electronic device according to an embodiment may include a memory including at least one application and a plurality of services, and a processor electrically connected to the memory.

The processor according to an embodiment may register, in response to booting the electronic device, in a first service among the plurality of services, at least one service other than the first service among the plurality of services, the at least one service being registered in an inactive state preparing for execution by the at least one application.

According to an embodiment, the first service may include a list in which the at least one service in the inactive state is registered.

According to an embodiment, the processor may execute a first application using a second service among the plurality of services, identify whether the second service is registered in the list in response to a request for the second service of the first application, and switch the second service from the inactive state to an active state, in which the second service can be executed by the at least one application, when it is identified that the second service is registered in the list.

A service operation method of an electronic device according to an embodiment may include registering, in response to booting the electronic device, in a first service among a plurality of services included in a memory, at least one service other than the first service among the plurality of services, the at least one service being registered in an inactive state preparing for execution by at least one application included in the memory, the first service including a list in which the at least one service in the inactive state is registered, executing a first application using a second service among the plurality of services, identifying whether the second service is registered in the list in response to a request for the second service of the first application, and switching the second service from the inactive state to an active state, in which the second service can be executed by the at least one application, when it is identified that the second service is registered in the list.

### [Advantageous Effects of Invention]

According to various embodiments, a process capable of dynamically controlling an active state or an inactive state of a system service based on whether there is a request (or call) of an application for the system service may be provided.

According to various embodiments, available memory space may be efficiently managed based on the state control of the system service.

According to various embodiments, power consumption or response speed of the electronic device may be improved based on the state control of the system service.

In addition, various effects identified directly or indirectly through this document may be provided.

### [Brief Description of Drawings]

FIG. 1 is a diagram illustrating an electronic device in a network environment according to an embodiment.
FIG. 2 is a diagram illustrating some components of an electronic device according to an embodiment.
FIG. 3 is a flowchart illustrating an operation of controlling activation of a system service of an electronic device according to an embodiment.
FIG. 4 is a flowchart illustrating an operation of controlling deactivation of a system service of an electronic device according to an embodiment.
FIG. 5 is a diagram illustrating a service operation method of an electronic device according to an embodiment.

In connection with the description of the drawings, like reference numerals may be assigned to identical or corresponding elements.

### [Best Mode for Carrying out the Invention]

Hereinafter, various embodiments of the present disclosure are disclosed with reference to the accompanying drawings. However, the present disclosure is not intended to be limited by the various embodiments of the present disclosure to a specific embodiment and it is intended that the present disclosure covers all modifications, equivalents, and/or alternatives of the present disclosure provided they come within the scope of the appended claims and their equivalents.

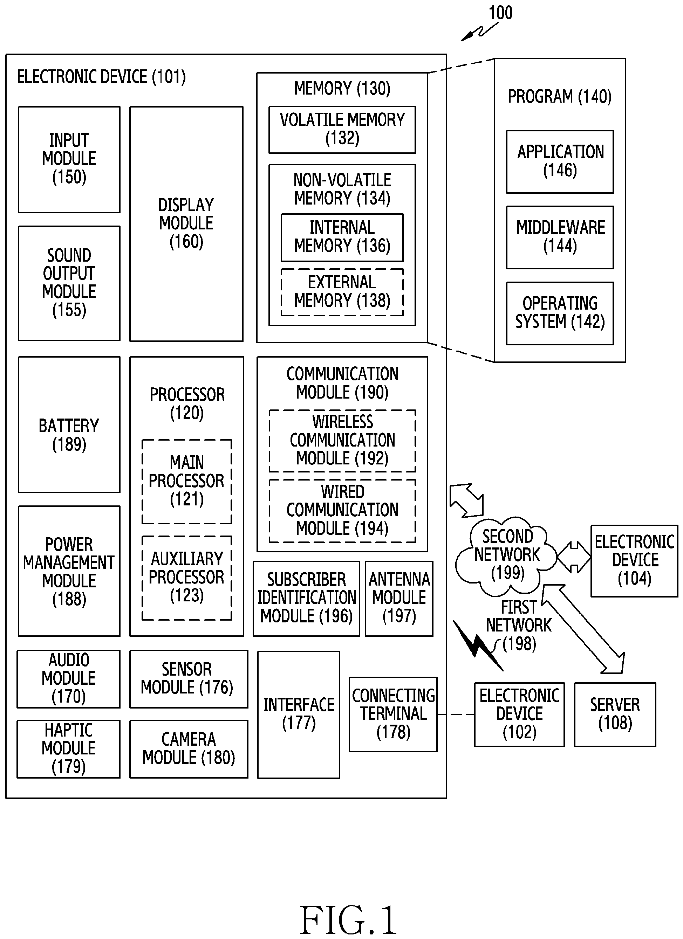

FIG. 1 is a diagram illustrating an electronic device in a network environment according to an embodiment.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

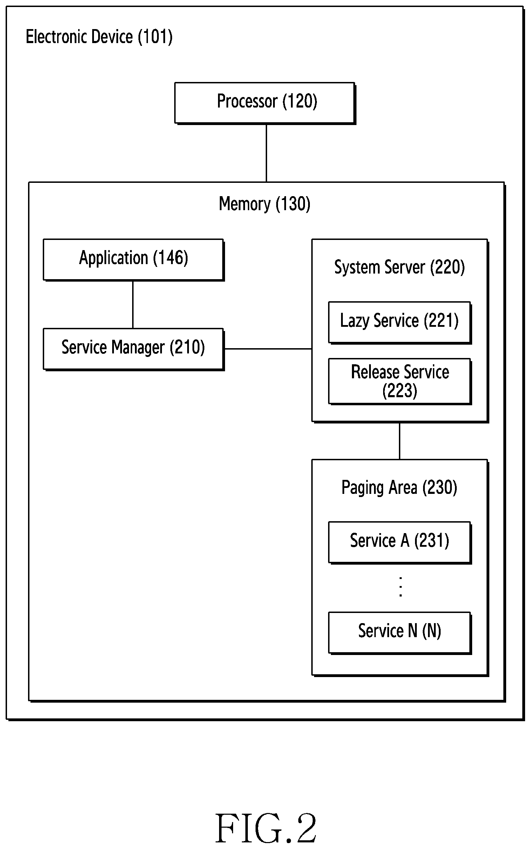

FIG. 2 is a diagram illustrating some components of an electronic device according to an embodiment.

Referring to FIG. 2, an electronic device 101 according to an embodiment may include a processor 120 and a memory 130. According to various embodiments, the electronic device 101 may additionally include components other than the above-described components. For example, the electronic device 101 may further include at least some of the components mentioned through FIG. 1.

The memory 130 may include a paging area 230, a service manager 210, a system server 220, and at least one application 146. In various embodiments, at least one of the service manager 210 and the system server 220 included in the memory 130 may be configured as a software program or a hardware module. In an embodiment, the at least one of the service manager 210 and the system server 220 may execute or operate under the control of the processor 120 to perform a function related to a corresponding component. In another embodiment, the at least one of the service manager 210 and the system server 220 may independently perform a function related to a corresponding component independently of the processor 120.

In an embodiment, the paging area 230 may include a plurality of services. For example, the paging area 230 may include a plurality of system services 231 to N (e.g., at least one of java system service and native system service) provided by at least one of a manufacturer of an operating system (e.g., Android, Ubuntu, iOS, or Windows) applied to the electronic device 101 and an operator of an original equipment manufacturer (OEM). In an embodiment, the paging area 230 may include resources (e.g., data and commands) required for execution of the plurality of system services 231 to N. In various embodiments, the paging area 230 may be an area to which a portion of the total capacity of the memory 130 is allocated or an area composed of lower layers of the memory 130. Alternatively, the paging area 230 may be a cache area that at least temporarily includes the plurality of system services 231 to N.

In an embodiment, the service manager 210 may support the use (or execution) of at least one application 146 for at least some of the plurality of system services 231 to N included in the paging area 230. For example, in the service manager 210, at least one system service among the plurality of system services 231 to N may be registered in an active state (e.g., initialized state) that can be executed by the at least one application 146. In various embodiments, the fact that the at least one system service is registered in the service manager 210 in the active state may mean an operation in which identification information and address information (e.g., path information in which the system service is located) of each of the at least one system service having the active state are recorded or registered in the service manager 210. According to an embodiment, the at least one system service being in the active state, which is registered in the service manager 210, may be switched to an inactive state based on a use end event for the corresponding system service.

In some embodiments, a lazy service 221 included in the system server 220 described below may be registered in the service manager 210. In addition, at least one system service being in an inactive state (e.g., un-initialized state) preparing for execution by at least one application 146 may be registered in the lazy service 221 registered in the service manager 210. In various embodiments, the fact that the at least one system service is registered in the inactive state in the lazy service 221 may mean an operation in which only identification information of each of the at least one system service having the inactivate state is recorded or registered in the lazy service 221. According to an embodiment, the at least one system service being in the inactivate state, which is registered in the lazy service 221, may be switched to the activate state based on a request (or call) of the at least one application 146 for the corresponding system service.

Hereinafter, the fact that the at least one system service is registered in the active state executable by the at least one application 146 may mean an operation in which identification information and address information of each of the at least one system service being in the active state are recorded or registered in an object in which the at least one system service is registered. Correspondingly, the fact that the at least one system service is registered in the inactive state preparing for execution by the at least one application 146 may mean an operation in which only identification information of each of the at least one system service being in the inactive state is recorded or registered in an object in which the at least one system service is registered.

In an embodiment, the system server 220 may support state transition for at least some of the plurality of system services 231 to N included in the paging area 230. In this regard, with respect to the at least one system service having the inactive state, the system server 220 may include the lazy service 221 that supports transition to the active state according to a request (or call) of the at least one application 146 for the corresponding system service. In addition, the system server 220 may include a release service 223 that supports a transition to the inactive state according to a use end event for the corresponding system service, with respect to the at least one system service having the active state.

In an embodiment, the at least one application 146 may execute at least one system service related to a function of the corresponding application. For example, the at least one application 146 may execute the at least one system service being in the active state, which is registered in the service manager 210, based on access to the service manager 210. In various embodiments, the at least one application 146 may independently execute each of the at least one system service being in the active state or may interlock and execute some of the at least one system service being in the active state. In various embodiments, the at least one application 146 may include at least one of an application loaded in the form of a preload when the electronic device 101 is manufactured and an application downloaded in the form of a third party from an online market.

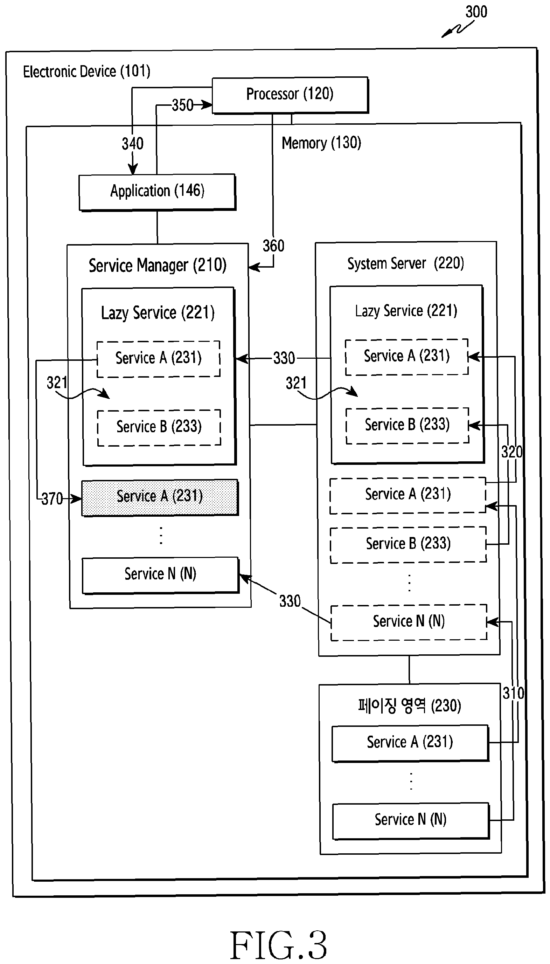

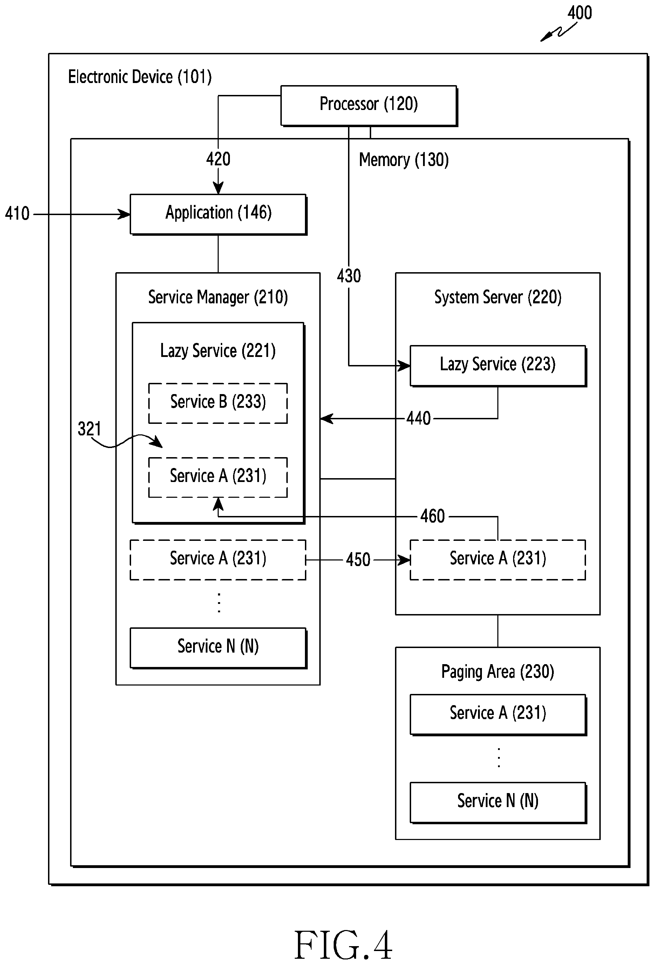

In an embodiment, the processor 120 may be electrically or operatively connected to the memory 130 to control a function or operation of the memory 130. For example, the processor 120 may transmit, to at least one of the at least one application 146 included in the memory 130, the service manager 210, and the system server 220, at least one instruction related to the function or operation of the corresponding component. In addition, the processor 120 may perform an operation or process on data received from the at least one of the at least one application 146, the service manager 210, and the system server 220. In an embodiment, the processor 120 may control the service manager 210 and the system server 220 to dynamically change the states of at least some of the plurality of system services 231 to N included in the paging area 230. For example, the processor 120 may identify the state of the corresponding system service in response to a system service request (or call) of the at least one application 146. When it is identified that the requested state of the system service is the inactive state, the processor 120 may switch the corresponding system service to the active state executable by the at least one application 146. For another example, the processor 120 may identify the state of the corresponding system service in response to the occurrence of a use end event for at least one system service. When it is identified that the state of the system service corresponding to the use end event is the active state, the processor 120 may switch the corresponding system service to the inactive state preparing for execution by the at least one application 146. Hereinafter, with reference to FIG. 3 or FIG. 4, various embodiments related to dynamic state transition of at least one system service will be described.

FIG. 3 is a flowchart 300 illustrating an operation of controlling activation for a system service of an electronic device according to an embodiment.

Referring to FIG. 3, the processor 120 of the electronic device 101 may identify booting of the electronic device 101. In response to the boot-up process, in operation 310, the processor 120 may register a plurality of system services 231 to N included in the paging area 230 of the memory 130 in the system server 220. For example, the processor 120 may register the plurality of system services 231 to N included in the paging area 230 in an inactive state (e.g., un-initialized state) preparing for execution by at least one application 146 in the system server 220.

In operation 320, the processor 120 may register at least some of the plurality of system services 231 and 233 to N being in the inactive state, which are registered in the system server 220, in the lazy service 221 included in the system server 220. For example, the processor 120 may maintain at least one system service in the inactive state and register the at least one system service in the lazy service 221. Accordingly, identification information of each of the at least one system service being in the inactive state may be recorded or registered in the lazy service 221 in the form of a list 321.

According to an embodiment, the processor 120 may register all of the plurality of system services 231 and 233 to N being in the inactive state, which are registered in the system server 220, in the lazy service 221.

According to another embodiment, the processor 120 may register some (e.g., service A 231 and service B 233) among the plurality of system services 231 and 233 to N being in the inactive state, which are registered in the system server 220, in the lazy service 221. In this regard, the memory 130 may include a first white list in which identification information of at least one system service (e.g., the remaining system services except service A 231 and service B 233 among the plurality of system services 231 and 233 to N) to be excluded from being registered for the lazy service 221. According to an embodiment, the first white list may be generated by the processor 120 and stored in the memory 130. In this regard, when a first boot-up process of the electronic device 101 is completed, the processor 120 may identify at least one system service that is executed within a designated period after the completion of the first boot-up process based on log information related to the execution history of the plurality of system services 231 and 233 to N. The processor 120 may record identification information on a designated number of system services, which are determined in descending order of execution count among the identified at least one system service, in the first white list. According to an embodiment, the processor 120 may refer to the first white list stored in the memory 130 when performing a second boot-up process after the first boot-up process. For example, the operation of registering at least some of the plurality of services 231 and 233 to N being in the inactive state, which are registered in the system server 220, in the lazy service 221, the processor 120 may exclude a designated number of system services corresponding to the identification information recorded in the first white list from being registered for the lazy service 221. According to various embodiments, the number of system services recorded in the first white list may be determined as a default value based on the capacity of the memory 130 or may be determined, or changed according to user control.

Alternatively, the memory 130 may include a second white list in which identification information of at least one system service to be excluded from being registered for the lazy service 221 is recorded. According to an embodiment, the second white list may be generated based on training of the processor 120 and stored in the memory 130. In this regard, the processor 120 may include a machine learning algorithm. When the first boot-up process of the electronic device 101 is completed, the processor 120 may use the machine learning algorithm to train the execution pattern (e.g., at least one of time information at the time of execution and location information of the electronic device 101 at the time of execution) of the at least one system service that is executed for a designated first period (e.g., a period between the first boot-up process and a third boot-up process before the first boot-up process). The processor 120 may group (e.g., at least one of groups classified according to execution time and groups classified according to execution location) identification information of the at least one system service whose execution pattern has been trained, for each of the execution patterns, and record the grouped information in the second white list. According to an embodiment, the processor 120 may refer to the second white list stored in the memory 130 when performing the second boot-up process after the first boot-up process. For example, in the operation of registering at least some of the plurality of system services 231 and 233 to N being in the inactive state, which are registered in the system server 220, in the lazy service 221, the processor 120 may identify a group corresponding to information of the current time (e.g., at least one of time information and location information of the electronic device 101) with reference to the second white list. The processor 120 may exclude at least one system service corresponding to the identified identification information in the group from being registered for the lazy service 221. According to various embodiments, at least one of the first white list and the second white list may be updated by the processor 120 in response to the boot-up process of the electronic device 101.

As described above, the plurality of system services 231 to N included in the paging area 230 may be registered in the inactive state in the system server 220 (or the lazy service 221 included in the system server 220) in response to the boot-up process of the electronic device 101. Accordingly, the plurality of system services 231 to N may not reside in the active state on the memory 130 and may not operate in the background on the electronic device 101.

In operation 330, the processor 120 may register the lazy service 221 included in the system server 220 in the service manager 210. In this case, in operation 320, the at least one system service registered in the inactive in the lazy service 221 may be registered in the service manager 210 based on the lazy service 221 while maintaining the inactive state. In an embodiment, when only some (e.g., service A 231 and service B 233) of the plurality of system services 231 and 233 to N being in the inactive state, which are registered in the system server 220 are registered in the lazy service 221, the processor 120 may register the remaining some system services (e.g., service N{N}) among the plurality of system services 231 and 233 to N being in the inactive state in the service manager 210 while registering the lazy service 221 for the service manager 210. For example, the processor 120 may switch the remaining some system services (e.g., service N {N}) from the inactive state to the activate state executable by the at least one application 146 to register the switched system services in the service manager 210. In this case, identification information and address information of the remaining some system services (e.g., service N{N}) switched to the active state may be recorded or registered in the service manager 210.

In operation 340, the processor 120 may detect a first user input for executing a first application among the at least one application 146 included in the memory 130. The processor 120 may execute the first application in response to the detection of the first user input. According to an embodiment, the first application may use (or execute) at least one of the plurality of system services 231 to N included in the paging area 230 in relation to the function operation of the corresponding application. For example, in operation 350, the processor 120 may detect a second user input for using a service related to the function of the first application, and receive a signal or data for requesting (or calling) at least one system service corresponding to the service from the first application.

In operation 360, the processor 120 may identify the service manager 210 in response to at least one system service request (or call) of the first application. For example, the processor 120 may identify the lazy service 221 registered in the service manager 210 by accessing the service manager 210. According to an embodiment, the processor 120 may identify a list 321 included in the lazy service 221 as at least part of the operation of identifying the lazy service 221. The processor 120 may identify at least one system service (e.g., service A 231 and service B 233) registered in the list 321 and the state of the corresponding system service.

In an embodiment, the at least one system service requested (or called) by the first application may correspond to at least some (e.g., service A 231) among the at least one system service (e.g., service A 231 and service B 233) being in the inactive state, which is registered in the form of the list 321 in the lazy service 221. In this case, the processor 120 may control the state of the at least one system service (e.g., service A 231) requested (or called) from the first application. For example, in operation 370, the processor 120 may switch the requested or called at least one system service (e.g., service A 231) being in the inactive state on the lazy service 221, which is registered in the service manager 210, to the active state (e.g., initialized state) executable by the first application. The processor 120 may register the at least one system service (e.g., service A 231) switched to the active state in the service manager 210. In addition, the processor 120 may release the registration of the requested (or called) at least one system service (e.g., service A 231) on the lazy service 221 registered in the service manager 210. Accordingly, identification information and address information on the at least one system service (e.g., service A 231) being in the active state, which is registered in the service manager 210, may be recorded or registered in the service manager 210. In an embodiment, the processor may use resources (e.g., data and instruction) of the corresponding system service included in the paging area 230, based on the identification information and address information of the at least one system service (e.g., service A 231) which is recorded or registered in the service manager 210. The processor 120 may use the resources to execute the at least one system service (e.g., service A 231) requested (or called) from the first application.

As described above, at least some (at least one system service registered in the lazy service 221) of the plurality of system services 231 to N included in the paging area 230 may be controlled in the inactive state preparing for execution before the request (or call) of the at least one application 146, and may be controlled in the executable active state from the inactive state based on the request (or call) of the at least one application 146.

In an embodiment, the at least one system service requested (or called) from the first application may not correspond to the at least one system service (e.g., service A 231 and service B 233) being in the inactive state, which is registered in the form of the list 321 in the lazy service 221. In this case, the processor 120 may identify the at least one system service (e.g., service N{N}) being in the active state, which is registered in the service manager 210. For example, the processor 120 may identify at least one system service corresponding to the at least one system service requested (or called) from the first application among the at least one system service (e.g., service N{N}) being in the active state, which is registered in the service manager 210. The processor 120 may use resources (e.g., data and instruction) of the corresponding system service included in the paging area 230, based on address information on the identified at least one system service recorded or registered in the service manager 210. The processor 120 may use the resources to execute the at least one system service requested (or called) from the first application.

In various embodiments, the processor 120 may perform the operation of identifying the at least one system service being in the inactive state, which is registered in the list 321 of the lazy service 221, in response to the at least one system service request (or call) of the first application, and the operation of identifying the at least one system service being in the active state, which is registered in the service manger 210, substantially simultaneously or sequentially according to a designated order.

FIG. 4 is a flowchart 400 illustrating an operation of controlling inactivation for a system service of an electronic device according to an embodiment.

Referring to FIG. 4, an embodiment at least partially related to the embodiment of FIG. 3 will be described. For example, in the embodiment described with reference to FIG. 4, there will be described operations of the electronic device of switching at least one system service (e.g., service A 231 of FIG. 3) from an active state (e.g., initialized state) to an inactive state (e.g., un-initialized state), wherein the at least one system service has been switched from the inactive state to the active state according to a request (or a call) of a first application and has been registered in a service manager (e.g., the service manager 210 of FIG. 3). In this regard, at least some of the components of the electronic device shown in FIG. 4 may be the same as the components of the electronic device mentioned through FIG. 3, and duplicate descriptions of the same components will be omitted below.

Referring to FIG. 4, in operation 410, an end event for using at least one system service of at least one application 146 included in the memory 130 of the electronic device 101 may occur. For example, an event in which execution of a first application capable of using at least one system service (e.g., service A 231) among a plurality of system services 231 to N included in the paging area 230 ends may occur. For another example, in the operating environment of the first application, an event in which the execution of the at least one system service (e.g., service A 231) that can be used by the first application ends may occur. For another example, an even in which the at least one system service (e.g., service A 231), which has been switched from the inactive state to the active state according to a request (or call) of the first application and has been registered in the service manager 210, is not executed by the first application until a designated first time elapses from the registration for the service manager 210 may occur.

In operations 420 and 430, the processor 120 may identify the occurrence of the end event related to the first application, and in response to the identification, execute (or call) a release service 223 included in the system server 220. In operation 440, the processor 120 may access the service manager 210 based on the execution of the release service 223. The processor 120 may identify the at least one system service (e.g., service A 231) corresponding to the end event among the at least one system service (e.g., the service A 231 and service N{N}) being in the active state, which is registered in the service manager 210.

In operation 450, the processor 120 may control the state of the identified at least one system service (e.g., service A 231). For example, as the end event occurs, the processor 120 may switch the at least one system service (e.g., service A 231) which is registered in the service manager 210 as the active state, to the inactive state preparing for execution by the first application, and release the registration from the service manager 210. In this case, identification information and address information on the at least one system service (e.g., service A 231) recorded or registered in the service manager 210 may be removed from the service manager 210. In addition, the processor 120 may register the at least one system service (e.g., service A 231) switched to the inactive state in the system server 220 as the inactive state. In operation 460, the processor 120 may register the lazy service 221 registered in the service manager 210 while maintaining the at least one system service (e.g., service A 231) being in the inactive state, which is registered in the system server 220. Accordingly, a list 321 included in the lazy service 221 may be updated from a state in which the existing at least one system service (e.g., service B 233) is registered to a state in which the at least one system service (e.g., service A 231) being in the inactive state is further registered.

According to various embodiments, in the operation of switching the at least one system service (e.g., service A 231), which has been registered in the service manager 210 as the active state, to the inactive state according to the occurrence of the end event, the processor 120 may refer to log information related to the execution history of the plurality of system services 231 to N. For example, the processor 120 may identify at least one other system service executed in conjunction with the at least one system service (e.g., service A 231) based on the log information. The processor 120 may generate a third white list in which identification information of the identified at least one other system service is recorded, and store the generated third white list in the memory 130. In an embodiment, the processor 120 may refer to the third white list when performing a second boot-up process after the first boot-up process of the electronic device 101. For example, in the operation of registering at least some of the plurality of system services 231 to N included in the paging area 230, in the lazy service 221, the processor 120 may exclude at least one system service corresponding to identification information recorded in the third white list from being registered for the lazy service 221. In this embodiment, in a case in which the at least one system service (e.g., service A 231) available in the first application is requested (or called) from the first application, since a request (or call) of the at least one other system service that can be executed in conjunction with the at least one system service (e.g., service A 231) is expected, this case may be understood as an operation for registering the at least one other system service in the service manger 210 as the active state.

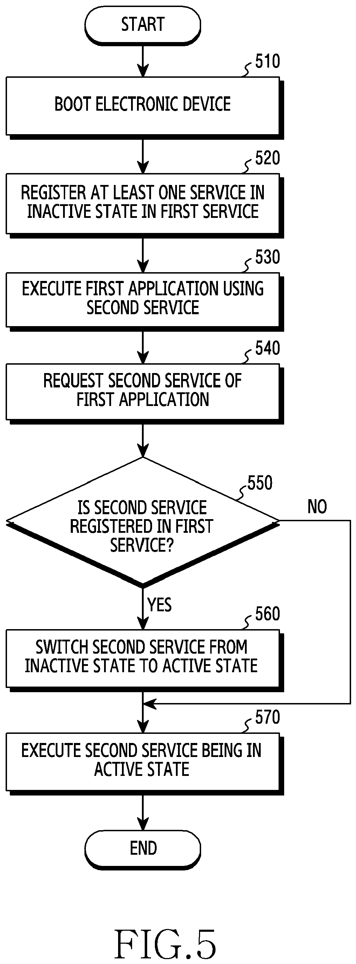

FIG. 5 is a diagram illustrating a service operation method of an electronic device according to an embodiment.

At least some of the operations of the electronic device described with reference to FIG. 5 may correspond to the operations of the electronic device (or processor) mentioned above with reference to FIG. 3, and duplicate descriptions of the same components will be omitted below.

Referring to FIG. 5, in operation 510, a processor (e.g., the processor 120 of FIGS. 1, 2, and 3, or FIG. 4) of an electronic device (e.g., the electronic device 101 of FIGS. 1, 2, and 3, or FIG. 4) may identify booting of the electronic device 101 and perform a series of boot-up processes.

In operation 520, the processor 120, in response to the boot-up process, may register at least some of a plurality of system services (e.g., the plurality of system services 231 to N of FIGS. 2 and 3 or FIG. 4) included in a memory (e.g., the memory 130 of FIGS. 1, 2, and 3, or FIG. 4) of the electronic device 101, in an inactive state in a designated first service (e.g., the lazy service 221 of FIG. 2 or FIG. 3). For example, the processor 120 may register the registered at least one system service in an inactive state (e.g., un-initialized state) preparing for execution by at least one application (e.g., the at least one application 146 of FIGS. 1, 2, and 3, or FIG. 4) included in the memory 130, in the first service (e.g., the lazy service 221). In an embodiment, the fact that the at least one system service is registered in the inactive state in the first service (e.g., the lazy service 221) may mean an operation in which identification information of each of the at least one system service being in the inactive state is recorded or registered in the first service (e.g., the lazy service 221).

In operation 530, the processor 120 may detect a first user input for executing a first application among the at least one application 146, and execute the first application in response to the detection of the first user input. In an embodiment, the first application may use (or execute) at least one second system service among the plurality of system services 231 to N in relation to the function operation of the corresponding application.

In operation 540, the processor 120 may detect a second user input for using a service related to the function of the first application, and receive a signal or data for requesting (or calling) at least one second system service corresponding to the service from the first application.

In operation 550, in response to the request (or call) for the at least one second system service, the processor 120 may determine whether the at least one second system service is registered in the first service (e.g., the lazy service 221). For example, the processor 120 may identify a list included in the first service (e.g., the lazy service 221), and identify the at least one system service registered in the list and the state of the corresponding system service.

In an embodiment, the at least one second system service requested (or called) by the first application may correspond to at least some of the at least one system service being in the inactive state, which is registered in the first service (e.g., the lazy service 221). In this case, in operation 560, the processor 120 may control the state of at least one second system service requested (or called) by the first application. For example, the processor 120 may switch the at least one second system service registered in the first service (e.g., the lazy service 221) from an inactive state to an active state (e.g., initialized state) executable by the first application. In addition, the processor 120 may release the registration of the at least one second system service switched to the active state on the first service (e.g., the lazy service 221). In an embodiment, the fact that the at least one second system service has the active state may mean that address information (e.g., path information in which the at least one second system service is located) on the at least one second system service can be used or provided.

In operation 570, the processor 120 may use resources (e.g., data and instruction) of the corresponding system service based on the address information of the at least one second system service switched to the active state, thereby executing the at least one second system service.

An electronic device according to the above described various embodiments may include a memory including at least one application and a plurality of services, and a processor electrically connected to the memory.

According to various embodiments, the processor may register, in response to booting the electronic device, in a first service among the plurality of services, at least one service other than the first service among the plurality of services, the at least one service being registered in an inactive state preparing for execution by the at least one application.

According to various embodiments, the first service may include a list in which the at least one service being in the inactive state is registered.

According to various embodiments, the processor may execute a first application using a second service among the plurality of services, identify whether the second service is registered in the list in response to a request for the second service of the first application, and switch the second service from the inactive state to an active state, in which the second service can be executed by the at least one application, when it is identified that the second service is registered in the list.

According to various embodiments, at least some of the plurality of services may include at least one of a java system service and a native system service.

According to various embodiments, the processor may generate at least one white list in which at least one service to be excluded from being listed for the first service among the plurality of services is recorded, and store the generated at least one white list in the memory.

According to various embodiments, in an operation of performing another booting after the booting, the processor may determine at least one service other than the first service among the plurality of services by using the at least one white list.

According to various embodiments, the at least one white list may include a first white list.

According to various embodiments, after completion of the booting, the processor may record, in the first white list, a designated number of at least one service, which is determined in a descending order of execution count among at least one service executed for a designated period.

According to various embodiments, the at least one white list may include a second white list.

According to various embodiments, after completion of the booting, the processor may train an execution pattern of at least one service executed during a period between the booting and the previous booting, and group the at least one service executed during the period between the booting and the previous booting based on the trained execution pattern to record the grouped service in the second white list.

According to various embodiments, in the operation of performing the other booting after the booting, the processor may identify a first service group corresponding to time information at the time of performing the other booting or location information of the electronic device at the time of performing the other booting among at least one service group recorded in the second white list, and determine at least one service included in the first service group as the at least one service to be excluded from being registered for the first service.

According to various embodiments, the at least one white list may include a third white list.

According to various embodiments, the processor may identify at least one service executed in conjunction with the second service in the first application among the plurality of services, and record the at least one service executed in conjunction with the second service in the third white list.

According to various embodiments, in response to the booting of the electronic device, the processor may control at least one service that is not registered in the first service among the plurality of services to be in an active state executable by the at least one application.

According to various embodiments, when it is identified that the second service is registered in the list, the processor may release the registration of the second service from the list included in the first service.

According to various embodiments, the processor may identify at least one end event related to the use of the second service by the first application, and switch, in response to the end event, the second service switched to the active state from the active state to an inactive state preparing for execution by the at least one application.

According to various embodiments, when the second service is switched from the active state to the inactive state, the processor may register the second service being in the inactive state in the first service.

A service operation method of an electronic device according to the above-described various embodiments may include registering, in response to booting the electronic device, in a first service among a plurality of services included in a memory, at least one service other than the first service among the plurality of services, the at least one service being registered in an inactive state preparing for execution by at least one application included in the memory, the first service including a list in which the at least one service in the inactive state is registered, executing a first application using a second service among the plurality of services, identifying whether the second service is registered in the list in response to a request for the second service of the first application, and switching the second service from the inactive state to an active state, in which the second service can be executed by the at least one application, when it is identified that the second service is registered in the list.

According to various embodiments, the service operation method may further include generating at least one white list in which at least one service to be excluded from being registered for the first service among the plurality of services is recorded, storing the at least one white list in the memory, and determining at least one service other than the first service among the plurality of services by using the at least one white list in an operation of performing another booting after the booting.

According to various embodiments, the generating of the at least one white list may include generating, after completion of the booting, a first white list in which a designated number of at least one service, which is determined in a descending order of execution count among at least one service executed for a designated period, is recorded.

According to various embodiments, the generating of the at least one white list may include training an execution pattern of at least one service executed during a period between the booting and the previous booting, after completion of the booting, and generating a second white list in which the at least one service executed during the period between the booting and the previous booting is grouped and recorded based on the trained execution pattern.

According to various embodiments, the determining of the at least one service other than the first service among the plurality of services may include identifying a first service group corresponding to time information at the time of performing the other booting or location information of the electronic device at the time of performing the other booting among at least one service group recorded in the second white list in the operation of performing the other booting after the booting, and determining at least one service included in the first service group as the at least one service to be excluded from being registered for the first service.

According to various embodiments, the generating of the at least one white list may include identifying at least one service executed in conjunction with the second service in the first application among the plurality of services, and generating a third white list in which the at least one service executed in conjunction with the second service is recorded.

According to various embodiments, the switching of the second service from the inactive state to the active state executable by the at least one application may include releasing the registration of the second service from the list included in the first service.

According to various embodiments, the service operation method may further include identifying at least one end event related to the use of the second service by the first application, and switching, in response to the end event, the second service switched to the active state from the active state to an inactive state preparing for execution by the at least one application.

According to various embodiments, the switching of the second service from the active state to the inactive state preparing for execution by the at least one application may include registering the second service being in the inactive state in the first service.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a memory comprising at least one application and a plurality of services; and
a processor electrically connected to the memory,
wherein the processor is configured to:
register, in response to booting the electronic device, in a first service among the plurality of services, at least one service other than the first service among the plurality of services, the at least one service being registered in an inactive state preparing for execution by the at least one application, the first service comprising a list in which the at least one service being in the inactive state is registered;
execute a first application using a second service among the plurality of services;
identify whether the second service is registered in the list in response to a request for the second service of the first application; and
switch the second service from the inactive state to an active state, in which the second service can be executed by the at least one application, in case that it is identified that the second service is registered in the list.

2. The electronic device of claim 1, wherein the processor is configured to:
generate at least one white list in which at least one service to be excluded from being listed for the first service among the plurality of services is recorded, and store the generated at least one white list in the memory; and
in an operation of performing another booting after the booting, determine at least one service other than the first service among the plurality of services by using the at least one white list.

3. The electronic device of claim 2, wherein the at least one white list comprises a first white list, and
wherein the processor is configured to record, in the first white list after completion of the booting, a designated number of at least one service determined in a descending order of execution count among at least one service executed for a designated period.

4. The electronic device of claim 2, wherein the at least one white list comprises a second white list, and
wherein the processor is configured to:
after completion of the booting, train an execution pattern of at least one service executed during a period between the booting and a previous booting; and
group the at least one service executed during the period between the booting and the previous booting based on the trained execution pattern to record the grouped service in the second white list.

5. The electronic device of claim 4, wherein the processor is configured to:
in the operation of performing the other booting after the booting, identify a first service group corresponding to time information at the time of performing the other booting or location information of the electronic device at the time of performing the other booting among at least one service group recorded in the second white list; and
determine at least one service included in the first service group as the at least one service to be excluded from being registered for the first service.

6. The electronic device of claim 2, wherein the at least one white list comprises a third white list, and
wherein the processor is configured to:
identify at least one service executed in conjunction with the second service in the first application among the plurality of services; and
record the at least one service executed in conjunction with the second service in the third white list.

7. The electronic device of claim 1, wherein the processor is configured to, in case that it is identified that the second service is registered in the list, release the registration of the second service from the list included in the first service.

8. The electronic device of claim 1, wherein the processor is configured to:
identify at least one end event related to the use of the second service by the first application;
switch, in response to the end event, the second service switched to the active state from the active state to an inactive state preparing for execution by the at least one application; and
register the second service switched to the inactive state, in the first service.

9. A service operation method of an electronic device, the service operation method comprising:
registering, in response to booting the electronic device, in a first service among a plurality of services included in a memory, at least one service other than the first service among the plurality of services, the at least one service being registered in an inactive state preparing for execution by at least one application included in the memory, the first service comprising a list in which the at least one service in the inactive state is registered;
executing a first application using a second service among the plurality of services;
identifying whether the second service is registered in the list in response to a request for the second service of the first application; and
switching the second service from the inactive state to an active state, in which the second service can be executed by the at least one application, in case that it is identified that the second service is registered in the list.

10. The service operation method of claim 9, further comprising:
generating at least one white list in which at least one service to be excluded from being registered for the first service among the plurality of services is recorded, storing the at least one white list in the memory; and
determining at least one service other than the first service among the plurality of services by using the at least one white list in an operation of performing another booting after the booting.

11. The service operation method of claim 10, wherein the generating of the at least one white list comprises generating, after completion of the booting, a first white list in which a designated number of at least one service, which is determined in a descending order of execution count among at least one service executed for a designated period, is recorded.

12. The service operation method of claim 10, wherein the generating of the at least one white list comprises:
training an execution pattern of at least one service executed during a period between the booting and the previous booting, after completion of the booting; and
generating a second white list in which the at least one service executed during the period between the booting and the previous booting is grouped and recorded based on the trained execution pattern, and
wherein the determining of the at least one service other than the first service among the plurality of services comprises:
identifying a first service group corresponding to time information at the time of performing the other booting or location information of the electronic device at the time of performing the other booting among at least one service group recorded in the second white list in the operation of performing the other booting after the booting; and
determining at least one service included in the first service group as the at least one service to be excluded from being registered for the first service.

13. The service operation method of claim 10, wherein the generating of the at least one white list comprises:
identifying at least one service executed in conjunction with the second service in the first application among the plurality of services; and
generating a third white list in which the at least one service executed in conjunction with the second service is recorded.

14. The service operation method of claim 9, wherein the switching of the second service from the inactive state to the active state executable by the at least one application comprises releasing the registration of the second service from the list included in the first service.

15. The service operation method of claim 9, further comprising:
identifying at least one end event related to the use of the second service by the first application;
switching, in response to the end event, the second service switched to the active state from the active state to an inactive state preparing for execution by the at least one application; and
registering the second service switched to the inactive state, in the first service.
